(19) Europäisches Patentamt
European Patent Office
Office européen des brevets

(11) EP 1 076 081 A1

(12) EUROPEAN PATENT APPLICATION

(43) Date of publication:
14.02.2001 Bulletin 2001/07

(51) Int Cl.[7]: **C09J 7/02**, C09D 183/04, C09D 183/06, C08F 290/14

(21) Application number: **99115882.5**

(22) Date of filing: **12.08.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **3M Innovative Properties Company**
**St. Paul, Minnesota 55133-3427 (US)**

(72) Inventors:
- **Jung, Dieter**
  **47447 Moers (DE)**
- **Luca, Maria**
  **40627 Düsseldorf (DE)**

(74) Representative: **Wilhelm, Stefan et al**
**3M Deutschland GmbH**
**Carl-Schurz-Strasse 1**
**41453 Neuss (DE)**

(54) **Pressure-sensitive adhesive tape suitable for low noise / high unwind speed applications**

(57) The present invention relates to a pressure-sensitive adhesive tape comprising a backing having a first major surface and a second major surface, a pressure-sensitive adhesive provided on said first major surface, and a release coating provided on said second major surface, said pressure-sensitive adhesive comprising one or more hot-melt coatable synthetic rubber polymers and said release coating comprising the reaction product of:

(i) 5 - 30 wt. % of one or more polydialkylsiloxanes having (meth)acrylate, vinyl and/or ethenylene groups wherein the ratio of the average number of dialkylsiloxane units to the average number of the sum of (meth)acrylate, vinyl and ethenylene groups is between 10 and 17,

(ii) 70 - 95wt. % of one or more polydialkylsiloxanes having (meth)acrylate, vinyl and/or ethenylene groups wherein the average number of dialkylsiloxane units to the average number of the sum of (meth)acrylate, vinyl and ethenylene groups is not more than 5 and/or one or more organic compounds free of silicone and comprising at least two reactive (meth)acrylate, vinyl and/or ethenylene groups,

(iii) an effective amount of one or more photoinitiators,

wherein the weight percentages given for components (i) and (ii), respectively, refer to the sum of the masses of components (i) and (ii) which add up to 100 wt. %, said pressure-sensitive adhesive tape exhibiting, when in the form of a roll, upon unwind at an unwind speed of 60 m/min or less a noise level of no greater than 75 dB (A).



Printed by Jouve, 75001 PARIS (FR)

## Description

### Field of the invention

The present invention relates to a pressure-sensitive adhesive tape comprising a backing having a first major surface and a second major surface, wherein a pressure-sensitive adhesive comprising one or more rubber polymers, is provided on said first major surface, and a silicone-based release coating is provided on said second major surface. The present invention also relates to the use of said pressure-sensitive adhesive tape when in the form of a roll, for low noise / high unwinding speed applications, in particular, in the field of packaging and box-sealing industries.

### Background of the invention

Pressure-sensitive adhesive tapes often include a backing, a release coating, and an adhesive composition. It is disclosed, for example, in the product brochure "Neue TEGO® RC Produkte für die Herstellung strahlenhärtender Trennbeschichtungen" (New TEGO® RC products for the preparation of radiation-curable release coatings), published by Th. Goldschmidt AG, Essen, Germany, in August 1998 that silicone-based release coatings are used in conjunction with (meth)acrylate based pressure-sensitive adhesive tapes such as TESA™ 7476 or 7475, or with solvent-coated natural rubber based pressure-sensitive adhesive tapes such as TESA™ 4154, to decrease and adjust the unwind force of the respective rolls of tape.

It is, however, often difficult to provide a pressure-sensitive adhesive tape having an exposed silicone release coating on the second major surface of its backing opposite to its first major surface bearing the pressure-sensitive adhesive layer, wherein said tape when coiled into the form of a roll,

- exhibits a controlled unwind force,
- has a high mechanical stability versus abrasion,
- has a reduced level of transfer or essentially no transfer of the release coating to the pressure-sensitive adhesive layer upon unwinding, and
- has a low level of noise upon unwinding, in particular, at high unwinding speeds of 60 m/min or more.

This preferred spectrum of properties is preferably required both in the freshly prepared pressure-sensitive adhesive tape and after aging. Controlling of the unwind force is required because if the unwind force is too low, the pressure-sensitive adhesive layer of a lap of the roll of tape may release or slide from the release-coated surface of the backing of the underlying lap causing the roll of tape to telescope. Also, when the unwind force is too low, the amount of tape which is unwound from the roll upon application of, for example, a small unwind force, is difficult to control. If the unwind force is too high, the release coating may be fully or partly transferred to the pressure-sensitive adhesive layer upon unwinding of the roll, resulting in a partial detackifying of the adhesive and/or decrease of the peel adhesion of the tape to a substrate.

It is disclosed in US patent no. 5,494,979 that transfer of the release coating to the adhesive layer can be reduced or avoided when using a release coating that includes the reaction product of an MQ silicone resin and an organopolysiloxane bearing one or more reactive (meth)acrylate groups.

The TEGO® RC products brochure recommends in the section "Hochgeschwindigkeitsabzug" (high unwinding speed) on pp. 4 - 5 that silicone release coatings comprising TEGO RC 709 allow for adjustment of differential release. TEGO RC 709 comprises a mixture of acrylate-modified polydialkylsiloxane TEGO RC 715 and an MQ resin in a weight ratio of 70:30. It was found by the present inventors that the inclusion of MQ resins in silicone-based release coatings often results in an increase of the level of noise upon unwinding.

Pressure-sensitive adhesive tapes are used in a wide variety of technical fields using a broad range of unwind speeds. When applied by end-users such tapes are often adhered at relatively low unwinding forces such as, for example, 0.1 - 30 m/min, whereas in some industrial applications such as, for example, packaging, box-sealing and diaper manufacturing, adhesive tapes are applied semi-automatically or automatically at high unwind speeds of, for example, 60 m/min or more and, in particular, of 100 - 150 m/min or more. One of the problems encountered with adhesive tapes is that unwinding the tape from the roll both at low and high unwinding speeds frequently results in an unacceptably high level of noise which causes discomfort and, in industrial applications, potential hearing damage to the workers in the taping area.

Adhesive tapes that include a silicone-based release coating may exhibit low noise at unwind. The noise level is influenced by both the release coating and the type of pressure-sensitive adhesive of the tape. While pressure-sensitive adhesive tapes comprising a backing having on its first major surface an acrylate-based pressure-sensitive adhesive and on its second major surface opposite to the first one, a silicone-based release coating, typically exhibit an acceptable or low level of noise during unwinding, pressure-sensitive adhesive tapes with a rubber-based pressure-sensitive adhesive and, in particular, synthetic rubber-based pressure-sensitive adhesive layer tend to exhibit a distinctly higher level of noise during unwinding. One example of a rubber-based tape system that can be prepared to produce low noise includes an epoxy-organopolysiloxane release composition and a synthetic rubber-based pressure-sensitive adhesive composition, as is described in WO 94/28,080. Ultraviolet (UV) radiation-curable epoxyfunctional silicone compositions that can be cured to form a release coating and include a UV-radiation-curable epoxyfunctional diorganopolysiloxane, an MQ resin, a photoinitiator, and, optionally, a halogenated hydrocarbon solvent, are disclosed in EP 0,473,995.

Pressure-sensitive adhesive compositions based on, e. g., natural or acrylate rubber, are typically coated onto a backing using organic solvent-based and dispersion coating processes. Organic solvent-based coating operations are undesirable from an environmental point of view and are often characterized by low coating speeds relative to hot-melt coating processes resulting in a low productivity. Dispersion coating processes using, for example, water-borne coatings, are disadvantageous because of the time and energy required for drying. Therefore, dispersion coating processes are often characterized by low processing speeds relative to hot-melt processes.

It was therefore an object of the present invention to provide a pressure-sensitive adhesive tape comprising a backing having a first major surface and a second major surface wherein a pressure-sensitive adhesive comprising one or more rubbers, is applied to said first major surface and a silicone-based release coating is provided on said second major surface, said pressure-sensitive adhesive being preferably selected to be hot-melt coatable and said release coating being selected so that such tape when coiled into the form of a roll

- has a low level of noise during unwinding, in particular, at high unwinding speeds of up to 60 m/min or more and especially of between 100 - 150 m/min or more,
- exhibits a high mechanical strength and a high mechanical stability versus abrasion,
- exhibits a low level of transfer of the silicone-based release coating to the pressure-sensitive adhesive layer during unwinding, and
- has a sufficiently high unwind force so that the stability of the roll is maintained during unwinding.

It was another object of the present invention to provide a roll of a pressure-sensitive adhesive tape, in particular, for use in the packaging and box-sealing industry, said roll of tape exhibiting the above preferred spectrum of properties and additionally a high rolling ball tack both in the freshly prepared and aged state, in particular, in the aged state.

## Summary of the invention

The present invention relates to a pressure-sensitive adhesive tape comprising a backing having a first major surface and a second major surface, a pressure-sensitive adhesive provided on said first major surface, and a release coating provided on said second major surface, said pressure-sensitive adhesive comprising one or more hot-melt coatable synthetic rubber polymers and said release coating comprising the reaction product of:

(i) 5 - 30 wt. % of one or more polydialkylsiloxanes having (meth)acrylate, vinyl and/or ethenylene groups wherein the ratio of the average number of dialkylsiloxane units to the average number of the sum of (meth)acrylate, vinyl and ethenylene groups is between 10 and 17,

(ii) 70 - 95 wt. % of one or more polydialkylsiloxanes having (meth)acrylate, vinyl and/or ethenylene groups wherein the average number of dialkylsiloxane units to the average number of the sum of (meth)acrylate, vinyl and ethenylene groups is less than 5 and/or one or more organic compounds free of silicone and comprising at least two reactive (meth)acrylate, vinyl and/or ethenylene groups,

(iii) an effective amount of one or more photoinitiators,

the weight percentages given for components (i) and (ii), respectively, refer to the sum of the masses of components (i) and (ii) which add up to 100 wt. %, said pressure-sensitive adhesive tape exhibiting when in the form of a roll, a noise level of no greater than 75 dB(A) upon unwind at an unwind speed of 60 m/min or less.

The present invention also refers to the use of a roll of a pressure-sensitive adhesive tape comprising a backing having a first major surface and second major surface, a pressure-sensitive adhesive provided on said first major surface, and a release coating provided on said second major surface, said pressure-sensitive adhesive comprising one or more hot-melt coatable synthetic rubbers and said release coating comprising the reaction product of:

(i) one or more polydialkylsiloxanes having (meth)acrylate, vinyl and/or ethenylene groups wherein the ratio of the

average number of dialkylsiloxane units to the average number of the sum of (meth)acrylate, vinyl and ethenylene groups is between 10 and 17,

(ii) one or more polydialkylsiloxanes having (meth)acrylate, vinyl and/or ethenylene groups wherein the average number of dialkylsiloxane units to the average number of the sum of (meth)acrylate, vinyl and ethenylene groups is less than 5 and/or one or more organic compounds free of silicone and comprising at least two reactive (meth) acrylate, vinyl and/or ethenylene groups,

(iii) an effective amount of one or more photoinitiators,

wherein the weight percentages given for components (i) and (ii), respectively, refer to the sum of the masses of components (i) and (ii) which add up to 100 wt. %, for low noise / high unwind speed applications, wherein said roll of pressure-sensitive adhesive tape exhibits upon unwind at an unwind speed of 60 m/min or less a noise level of no greater than 75 dB(A).

The present invention furthermore refers to a method of preparing the pressure-sensitive adhesive tape useful in the present invention, said method comprising the steps of

- providing a backing optionally pre-treated with chemical primers or plasma discharge treating methods on one or both major surfaces,
- hot-melt extruding the pressure-sensitive adhesive layer onto the first major surface of the backing,
- coating the curable precursor of the release coating comprising said components (i) - (iii), onto the second major surface, and
- curing the applied release coating by exposing it to actinic radiation or thermal energy.

Detailed description of the invention

The pressure-sensitive adhesive tapes of the present invention include a backing, a pressure-sensitive adhesive on the first major surface of the backing, and a release coating on the second major surface of the backing.

Useful backing materials for the pressure-sensitive adhesive tape include films and layers of various stiffness. Preferred backings are flexible. Suitable backing materials include, e. .g., polymeric films and layers, paper (e. g. treated paper) films and layers, layers of non-wovens, laminates (such as, for example, polyacrylate foams laminated on both sides with polyolefin films, and papers laminated or jig-welded with polyethylene terephthalate), metals, and combinations thereof. Useful polymeric films and layers include, for example, polyolefin polymers, monoaxially oriented polypropylene (MOPP), biaxially oriented polypropylene (BOPP), simultaneously biaxially oriented polypropylene (SBOPP), polyethylene, copolymers of polypropylene and polyethylene, polyester polymers, polycarbonate polymers, polymethacrylate polymers, cellulose acetate, polyester (e. g. biaxially oriented polyethylene terephthalate), vinyl acetates, and combinations thereof. Useful backings also include surface modified backings modified by, e. g., plasma discharge techniques including corona discharge treatment and flame treatment, mechanical roughening and chemical primers.

Preferred backings have a thickness of between 20 µm and 3,000 µm, preferably of between 20 µm and 1,000 µm and more preferably of between 25 µm and 100 µm.

The pressure-sensitive adhesive tape of the present invention includes a pressure-sensitive adhesive layer comprising one or more synthetic rubber polymers which are preferably selected from the group of synthetic rubber block copolymers. Especially preferred are synthetic rubber block copolymers of the ABA- or AB-block type, where A is a thermoplastic block and B is a rubbery block, but other synthetic rubber block copolymers can be used as well. The block copolymers can be linear, branched, radial, and combinations thereof. Examples of suitable block copolymers include styrene-isoprene-styrene (SIS), styrene-butadiene-styrene (SBS), styrene-ethylene-butadienestyrene (SEBS), styrene-butadiene (SB), ethylene-propylene-diene, and hydrogenation products thereof. Preferred A-B-A block copolymers are described in some detail in D. Satas (ed.), Handbook of pressure-sensitive adhesive technology, 2$^{nd}$ edition, Van Nostrand Reinhold, New York 1989, pp. 317 - 373.

Suitable commercially available block copolymers include, e. g., those block copolymers available under product numbers 1107, 1101, 1111, 1112 and 1117 from Shell Chemical Company under the Kraton™ trademark. Other useful block copolymers include Vector™ 4100 series block copolymers, available from Dexco Polymers.

The pressure-sensitive adhesive compositions useful in the present invention preferably additionally include tackifiers, which can be solid, liquid, and combinations thereof. Suitable solid tackifiers include, e. g., rosin, rosin derivates, hydrocarbon resins, polyterpenes, coumarone indenes, and combinations thereof. Suitable liquid tackifiers include, e. g., liquid hydrocarbon resins, hydrogenated liquid polystyrene resins, liquid polyterpenes, liquid rosin esters, and combinations thereof. Suitable tackifier resins are described in D. Satas, Handbook of pressure-sensitive adhesives, loc. cit., and pp. 527 - 544. Preferred commercially available tackifier resins include Excorez 2203 and 1310 from Exxon Chemicals, Wingtack™ 95 and Wingtack™ Plus from the Goodyear Tire & Rubber Company, and Regalrez™ 1018 and 1078 from Hercules, Inc.

The pressure-sensitive adhesive compositions can also include one or more additives such as, for example, bonding agents, plasticizers, antioxidants, stabilizers, fillers, oils, polymer additives such as, for example, poly(ethylene vinyl acetate), dyes, pigments and combinations thereof.

The synthetic rubber-based pressure-sensitive adhesive useful in the present invention is preferably prepared using a compounder, for example, a twin screw extruder to mix the components of the adhesive. A suitable twin screw extruder is described, for example, in the Short Course Notes of the Technical Association of the Pulp and Paper Industry, 1981, Hot Melt Coatings, "Liquid resin injection system for continuous mixing of HMPSA", W. H. Korez. The extruder described includes a port valve for injecting liquid resins.

The synthetic rubber-based pressure-sensitive adhesive useful in the present invention is hot-melt coatable, i. e. can be applied to the first major surface of the backing essentially without using solvents. The synthetic rubber resin based pressure-sensitive adhesive is preferably extruded onto the optionally pre-treated first major surface of the backing in an essentially solvent-free manner.

The release coating of the pressure-sensitive adhesive tape useful in the present invention includes the reaction product of:

(i) one or more polydialkylsiloxanes having (meth)acrylate, vinyl and/or ethenylene groups wherein the ratio of the average number of dialkylsiloxane units to the average number of the sum of (meth)acrylate, vinyl and ethenylene groups is between 10 and 17,

(ii) one or more polydialkylsiloxanes having (meth)acrylate, vinyl and/or ethenylene groups wherein the average number of dialkylsiloxane units to the average number of the sum of (meth)acrylate, vinyl and ethenylene groups is not more than 5 and/or one or more organic compounds free of silicone and comprising at least two reactive (meth)acrylate, vinyl and/or ethenylene groups, and

(iii) an effective amount of one or more photoinitiators,

wherein the amount of components (i) and (ii), respectively, is selected so that said pressure-sensitive adhesive tape when in the form of a roll, exhibits a low noise level of preferably no greater than 75 dB(A) upon unwind at an unwind speed of up to 60 m/min, and preferably a noise level of no greater than 80 dB(A) and especially preferably of no greater than 75 dB(A) upon unwinding at an unwind speed of up to 150 m/min. The amount of component (i) is preferably 5 - 30 wt. % and the amount of component (ii) is preferably 70 - 95 wt. %, whereby said percentages refer to the sum of the masses of components (i) and (ii) which add up to 100 wt. %.

Radiation-curable polydialkylsiloxanes which are useful in the present invention are preferably selected from the group of compounds of formula (I)

$$R^1R^1R^2SiO(R^1R^1SiO)_x(R^1R^2SiO)_y(R^1R^1SiO)_zSiR^1R^1R^2 \qquad I$$

taking into account the selection criteria specified above and below for components (i) and (ii) of the curable precursor of the reaction product comprised by the release coating.

In the compounds of formula (I)

$R^1$ independently from each other is an alkyl group having 1 - 3 carbon atoms,
$R^2$ independently from each other is an optionally branched alkyl group with 1 - 20 carbon atoms wherein one or more $CH_2$ groups may be replaced with

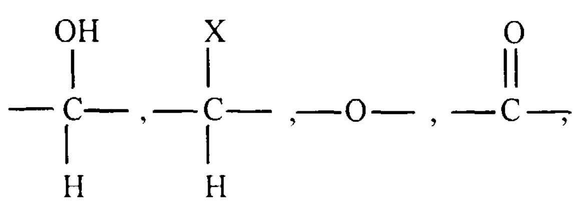

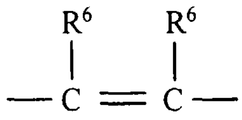 or 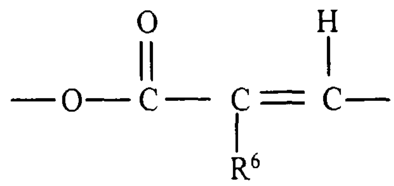

and wherein one or more $CH_3$ groups may be replaced with

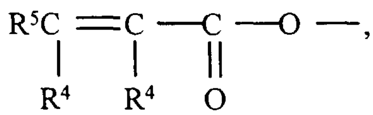

$CHY_2$ — , $CH_2Y$ — , or HCO — with the proviso that two oxygen atoms are not directly linked,
$R^4$ independently from each other is H or CH3,
$R^5$ independently from each other is H or an optionally branched alkyl group having 1-5 carbon atoms,
$R^6$ independently from each other is H or $R^1$,
X independently from each other is F or Cl,
Y independently from each other is F, Cl or OH,
x is 0 or a number of up to 200,
y is 0 or a number of up to 40,
z is 0 or a number of up to 200,

with the provisos that

- $5 \leq x + y + z \leq 300$ and
- the average number of the sum of (meth)acrylate, vinyl and/or ethenylene groups of the compounds of formula I is ≥ 2 .

$R^2$ and/or y are selected so that the acrylate, vinyl and/or ethenylene group of the polydialkylsiloxane compounds on average is at least 2 and more preferably at least 2.1 in order to obtain upon curing (e. g., UV or electron (E)-beam curing) a crosslinked, 3-dimensional release coating. Polydialkylsiloxane compounds of formula I having an average (meth)acrylate, vinyl and/or ethenylene functionality of at least 2.2, preferably at least 2.3, more preferably about 2.3 - 6, are preferred. The compounds of formula I preferably comprise at least one (meth)acrylate groups and especially preferably two or more (meth)acrylate groups and no vinyl or ethenylene group.
Useful examples of group $R^2$ include

- $H_3C$—
- $H_3C$ — $(CH_2)_t$ —
- 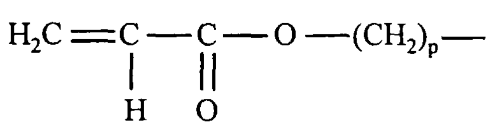

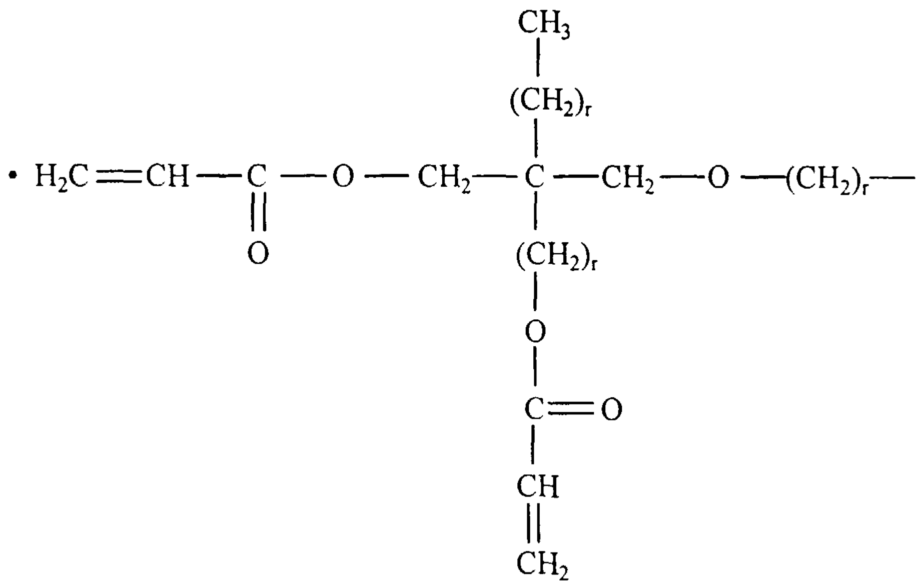

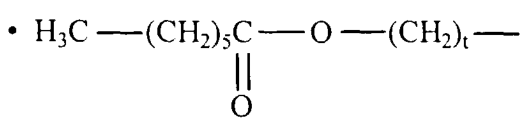

wherein

p is 1-8,
r is 0-5, and
t is 1-9.

The polydialkylsiloxanes of formula I can be prepared using the methods described in DE 38 10 140 and incorporated herein.

Radiation-curable polydialkylsiloxanes which are useful in the present invention can further be selected from the polydialkylsiloxanes described in US patent no. 5,494,979, col. 11, ln. 16 - col. 13, ln. 1 and designated therein as organopolysiloxanes B, taking into account the selection criteria specified for components (i) and (ii) of the curable precursor of the reaction product comprised by the release coating of the present invention.

Polydialkylsiloxanes which are useful in component (i) of the curable precursor of the reaction product, exhibit a ratio of the average number of dialkylsiloxane units to the average number of the sum of (meth)acrylate, vinyl and ethenylene groups of between 10 and 17 (also termed above and below as selection criteria (i)) and, more preferably, of between 10 and 15. In the compounds of formula I, the dialkylsiloxane units are designated as $-OSiR^1R^1-$, and the sum of (meth)acrylate, vinyl and ethenylene groups is obtained by adding up the number of such groups in substitutents $R^2$.

One example of a useful (meth)acrylate modified polydialkylsiloxane of formula I fulfilling selection criterion (i) is TEGO RC 902 which is commercially available from Th. Goldschmidt AG, Essen, Germany. TEGO RC 902 was analytically evaluated by the present inventors by using nuclear magnetic resonance (NMR) spectroscopy ($^1H$, $^{13}C$, $^{29}Si$) and gel permeation chromatography (GPC), and is believed to be

$$(F^1, F^2, F^3)—[(CH_3)_2SiO]_{56}Si(CH_3)_2—(F^1, F^2, F^3)$$

wherein

$F^1$ is

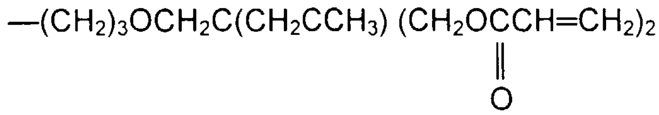

$F^2$ is

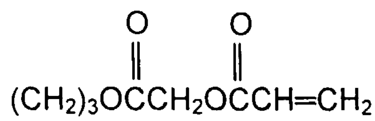

$F^3$ is

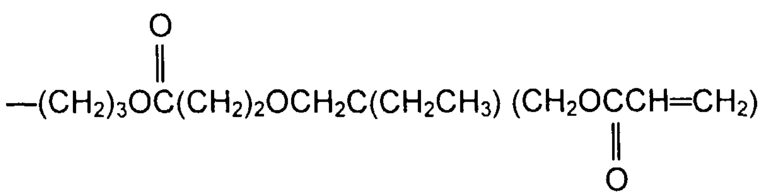

with F1 being the major end group and $F^2$, $F^3$ being present in minor amount only.

TEGO RC 902 has a ratio of the average number of dimethylsiloxane groups —$OSi(CH_3)_2$— to the average number of the sum of (meth)acrylate groups of approximately 14.0.

Another example of a useful acrylate modified polysiloxane of formula I fulfilling selection criterion (i) is TEGO RC 715 which is commercially available from Th. Goldschmidt AG. TEGO RC 715 was analytically evaluated by the present inventors by using NMR spectroscopy ($^1H$, $^{13}C$, $^{29}Si$) and GPC, and is believed to be

$$(D^1,D^2)—[(CH_3)_2SiO]_{26}Si(CH_3)_2—(D^1, D^2)$$

where

$D^1$ is $H_2C{=}CHCOOCH_2CH(OH)CH_2O(CH_2)_3$—

$D^2$ is $HOCH_2C[(OOCCH{=}CH_2)H]CH_2O(CH_2)_3)$—

where $D^1$ and $D^2$ are present approximately in a ratio of about 4 : 1.

TEGO RC 715 has a ratio of the average number of dimethylsiloxane groups —$OSi(CH_3)_2$— to the average number of the sum of acrylate groups (i. e. a functionality) of approximately 13.0.

Polydialkylsiloxanes which are useful in component (ii) of the curable precursor of the reaction product which is comprised by the release coating useful in the present invention, exhibit a ratio of the average number of dialkylsiloxane units to the average number of the sum of (meth)acrylate, vinyl and ethenylene groups not more than 5.

One example of a useful acrylate modified polydialkylsiloxane of formula I fulfilling selection criterion (ii) is TEGO RC 711 which is commercially available from Th. Goldschmidt AG. TEGO RC 711 was analytically evaluated by the present inventors by using NMR spectroscopy ($^1H$, $^{13}C$, $^{29}Si$) and GPC, and is believed to be

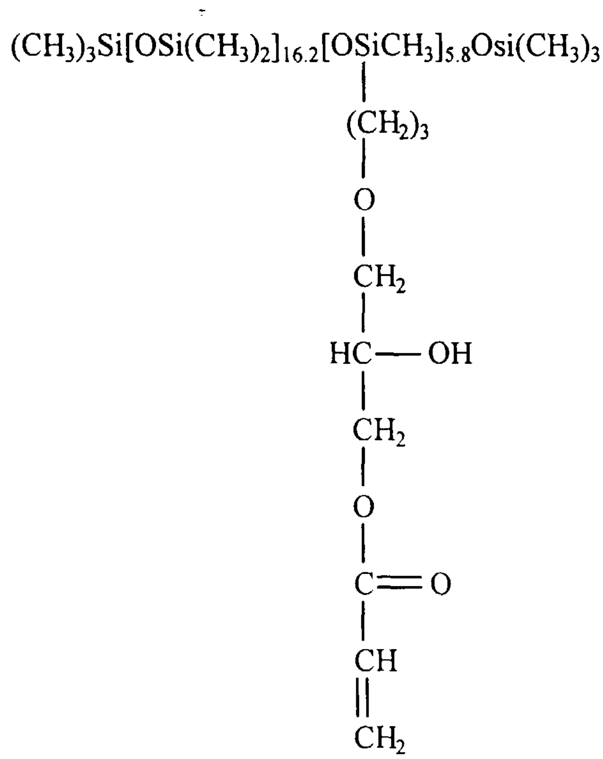

TEGO RC 711 has a ratio of the average number of dimethylsiloxane groups —$OSi(CH_3)_2$— to the average number of acrylate groups of approximately 2.5.

Another example of a useful polydialkylsiloxane compound suitable in component (ii) is TEGO RC 706 having a ratio of the average number of the sum of dimethylsiloxane groups —$OSi(CH_3)_2$—/average number of acrylate groups of approximately 8. TEGO RC 706 was analytically evaluated by the present inventors using NMR spectroscopy ($^1H$, $^{13}C$, $^{29}Si$) and GPC, and is believed to be

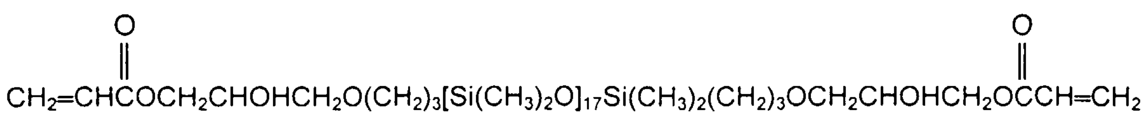

Component (ii) of the curable precursor of the reaction product comprised by the release coating useful in the present invention, may also comprise one or more organic compounds free of silicone and comprising at least two reactive (meth)acrylate, vinyl and/or ethenylene groups. (Meth)acrylate substituted silicone-free organic compounds such as (meth)acrylated polyhydroxy compounds or (meth)acrylated polyamino compounds are preferred.

The silicone-free organic compound useful in component (ii) of the reaction product comprised by the release coating, preferably has at least two and more preferably at least three acrylate and/or methacrylate groups. The organic compound should preferably also have a viscosity of between 20 mPa·s and 2,000 mPa·s at 25 °C and more preferably of between 100 mPa·s and 600 mPa·s at 25 °C. Particular examples of organic compounds for use in the invention include ditrimethylol propane tetraacrylate available as E 140 from UCB Chemicals, Belgium and E 810, a polyester tetraacrylate available from UCB. Modified pentaerythritol triacrylate (viscosity ca. 500 mPa s) available as SR-444 from Sartomer, aliphatic diacrylate oligomer (viscosity ca 1,000 mPa s) available as CN-132 from Sartomer, ethoxylated bisphenol A dimethacrylate (viscositiy ca. 1,100 mPa s) available as SR-348 from Sartomer, bisphenol A derivative diacrylate oligomer (viscosity ca. 1,400 mPa s) available as E-150 from UCB.

It is an essential feature of the present invention that the curable precursor of the reaction product comprised by the release coating, comprises

(i) one or more polydialkylsiloxane compounds with a ratio of the average numbers of dialkylsiloxane groups/ average number of the sum of (meth)acrylate, vinyl and/or ethenylene groups of between 10 and 17, and
(ii) one or more polydialkylsiloxane compounds with a ratio of the average number of dialkylsiloxane groups/average number of the sum of (meth)acrylate, vinyl and/or ethenylene groups of less than 5 and/or one or more organic groups free of silicone and comprising at least two reactive (meth)acrylate, vinyl and/or ethenylene groups.

Due to their lower polarity in comparison to the compounds of component (ii), the compounds of component (i) tend to accumulate at the exposed surface of the layer of the precursor of the reaction product applied to the backing of the pressure-sensitive adhesive layer, thereby influencing the surface properties of the release coating.

It was found by the present inventors that if component (i) of the curable precursor of the reaction product is based on polydialkylsiloxane compounds with a lower polarity, i. e. with a ratio of the average number of polydialkylsiloxane groups/average number of the sum of (meth)acrylate, vinyl and/or ethenylene groups of more than 17, the resulting cured release coating comprising the reaction product of components (i) and (ii), tends to exhibit an insufficient anchoring to the backing and/or an insufficient mechanical stability, as can be seen, for example, from the response of the release coating to the readhesion test and/or to the abrasion test described below. The abrasion test measures the amount of cured release coating removed under specified abrasion conditions and therefore reflects the mechanical stability of the release coating. The re-adhesion test indicates whether the cured release coating when adhered to a standard adhesive tape under specified conditions, is damaged upon removal from such adhesive surface.

An example of a polydialkylsiloxane compound having a ratio of the average number of dimethylsiloxane groups $-OSi(CH_3)_2-$/average number of the sum of acrylate groups of approximately 17.5, is TEGO RC 726 which is commercially available from Th. Goldschmidt AG. TEGO RC 726 was analytically evaluated by the present inventors using nuclear magnetic resonance (NMR) spectroscopy ($^1H$, $^{13}C$, $^{29}Si$), and gel permeation chromatography (GPC), and is believed to be

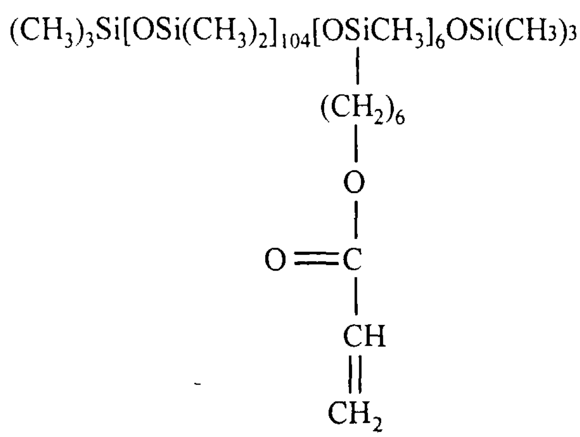

It was furthermore found by the present inventors that if component (i) is based on polydialkylsiloxane compounds with a higher polarity, i. e. with a ratio of the average number of polydialkylsiloxane groups/number of the average sum of (meth)acrylate, vinyl and/or ethenylene groups of less than 10, the resulting release coating comprising the reaction product of component (i) and (ii) tends to result in a shocky unwind behaviour of the roll of tape and a high noise level upon unwind.

It was furthermore found by the present inventors that the amount of the compound or compounds, respectively, of component (i) with respect to the sum of the masses of the compounds of components (i) and (ii) is preferably selected to vary between 5 and 30 wt. %. If the amount of the compound or compounds, respectively, of component (i) exceeds 30 wt. %, the unwind force of the pressure-sensitive adhesive tape of the present invention when coiled into the form of a roll, tends to be too low so that the roll of tape may telescope upon unwinding. If the amount of the compound or compounds, respectively, of component (i) is less than 5 wt. %, the pressure-sensitive adhesive tape when in the form of a roll, tends to exhibit a shocky unwind behaviour and a high noise level upon unwind.

The precursors of the reaction product comprised by the release coating of the pressure-sensitive adhesive tape of the present invention, has a second component (ii) having one or more polydialkylsiloxane compounds with a ratio of the average number of dialkysiloxane groups/sum of (meth)acrylate, vinyl and/or ethenylene groups of not more than 5 and/or one or more organic groups free of silicone and comprising at least two reactive (meth)acrylate, vinyl and/or ethenylene groups.

Due to their higher polarity in comparison with the compounds of component (i), the compounds of component (ii) tend to accumulate near by and at the surface of the backing of the pressure-sensitive adhesive tape the release coating is applied to, thereby influencing the anchoring of the release coating to the backing.

It was found by the present inventors that if component (ii) is based on polydialkylsiloxane compounds with

a lower polarity, i. e. with a ratio of the average number of dialkylsiloxane groups/average number of the sum of (meth) acrylate, vinyl and/or ethenylene groups of more than 5, the resulting release coating comprising the reaction product of component (i) and (ii) tends to exhibit an insufficient anchoring to the backing and/or an insufficient mechanical stability.

It was furthermore found by the present inventors that component (ii) may comprise in addition to or instead of polydialkylsiloxane compounds with a ratio of the average number of dialkylsiloxane groups/sum of (meth)acrylate, vinyl and/or ethenylene groups of less than 5, one or more silicone-free organic compounds comprising at least two and more preferably at least three reactive (meth)acrylate, vinyl and/or ethenylene groups. Radiation-curable precursors of the reaction product wherein component (ii) comprises at least 30 wt. % and, in particular, at least 50 wt. % of one or more high polar polydialkylsiloxane compounds with a ratio of the average number of dialkylsiloxane groups/ sum of (meth)acrylate, vinyl and/or ethenylene groups of less than 5, are preferred.

It was furthermore found by the present inventors that the amount of the compound or compounds, respectively, of component (ii) is preferably selected to vary between 70 and 95 wt. % with respect to the sum of the masses of the compounds of component (i) and (ii) which add up to 100 wt. %. It was found by the present inventors that if the amount of the compound or compounds, respectively, of component (ii) is less than 70 wt. %, the anchoring of the release coating on the backing of the pressure-sensitive adhesive tape is too low and the release coating tends to be abradable.

The concentration of components (i) and (ii) of the radiation-curable precursor of the reaction product are preferably selected within the ranges as given above so that the precursors of the reaction product and the release coating, respectively, form coatable mixtures or solutions. If necessary, a small amount of solvent such as, for example, heptane, may be added.

In the polydialkylsiloxane compounds useful in components (i) and (ii), the reactive groups preferably are (meth)acrylate or vinyl and especially preferably (meth)acrylate.

In the polydialkylsiloxane compounds useful in components (i) and (ii), the alkyl groups in the dialkylsiloxane units $-OSi(alkyl)_2-$ preferably are independently from each other methyl, ethyl, n-propyl or i-propyl, more preferably methyl or ethyl and especially preferably methyl.

The reaction product comprised by the release coating of the pressure-sensitive adhesive tape of the present invention, furthermore includes one or more photoinitiators in an amount to effect photopolymerization of components (i) and (ii) of the precursor of the reaction product. Examples of suitable photoinitiators include benzyl ketals, benzoin ethers, acetophenone derivates, ketoxime ethers, benzophenone and benzo- or thioxanthones. Specific examples of photoinitiators include: 2,2-diethoxyacetophenone; 2- or 3- or 4- bromoacetophenone; benzoin; benzophenone; 4-chlorobenzophenone; 4- phenylbenzophenone; benzoquinone; 1- chloroanthroquinone; p-diacetyl-benzene; 9, 10 dibromoanthracene; 1,3-diphenyl-2-propanone; 1,4-naphtyl-phenyl ketone; 2,3-pentenedione; propiophenone; chlorthioxanthone; xanthone; fluorene; and mixtures thereof. An example of a suitable photoinitiator is Darocure 1173, which is commercially available from Ciba Geigy, Switzerland. Another example of a suitable photoinitiator is Esacure KIP 150 which is commercially available from Fratelli-Lamberti, Italy.

The precursor of the release coating composition may also include additives such as, for example, stabilizers, dyes, pigments, antioxidants, fillers such as, for example, silica or conductive particles, and combinations thereof. The precursor of the release coating may furthermore comprise polymer additives such as, for example, film-formers or polyolefin-based waxes.

The amount of such additives preferably is no greater than 35 wt. %, more preferably no greater than 30 wt. % with respect to the sum of the masses of components (i) and (ii).

It was surprisingly found by the present inventors that the pressure-sensitive adhesive tapes of the present invention comprising a hot-melt coatable synthetic rubber-based pressure-sensitive adhesive layer, preferably exhibit when coiled into the form of a roll, a very low noise level upon unwinding of no greater than 75 dB(A) and more preferably of no greater than 70 dB(A) at an unwind speed of 60 m/min or less. Such low noise level which is measured according to the method of measurement specified in the test section below, is obtained both for freshly prepared and aged rolls of pressure-sensitive adhesive tapes. The terms freshly prepared and aged, respectively, pressure-sensitive adhesive tape as used above and below, are defined in Example 1 below. Especially preferred are pressure-sensitive adhesive tapes of the present invention which exhibit when coiled into the form of a roll, a very low noise level upon unwinding of no greater than 80 dB(A), more preferably of 75 dB(A) or less and especially preferably of 70 dB(A) or less at an unwind speed of 150 m/min or less. The rolls of tape of the present invention can also be used at unwind speeds of more than 150 m/min and exhibit an advantageous level of noise at such high unwind speeds.

The pressure-sensitive adhesive tapes of the present invention are characterized by a high mechanical stability and a low transfer of the cured release coating to the pressure-sensitive adhesive layer.

Rolls of the pressure-sensitive adhesive tape of the present invention wherein components (i) and (ii) of the pressure-sensitive adhesive are selected so that said roll exhibits upon unwinding a re-adhesion value of at least 90 % and, in particular, at least 95 % are preferred. The re-adhesion value is measured using the test method disclosed

in the test section below.

Pressure-sensitive adhesive tapes wherein component (i) and (ii) and the pressure-sensitive adhesive are selected so that the silicone loss as evaluated in the abrasion test specified in the test section below, is less than 40 wt. %, more preferably less than 30 wt. % and especially preferably less than 25 wt. %, are furthermore preferred.

The tack of synthetic rubber-based pressure-sensitive adhesive materials can be modified by varying the nature of the synthetic rubber(s) and/or tackifier resin(s) employed herein and/or by varying the amount of such synthetic rubber(s) and/or tackifier resin(s) with respect to the mass of the pressure-sensitive adhesive material. It was observed, however, in prior art that the tack of the pressure-sensitive adhesive layer in a roll of tape often distinctly deteriorates upon aging. Although the present inventors do not wish to be bound by the following attempt of an explanation it is speculated that the decrease in tack results from an interaction of the pressure-sensitive adhesive layer of a lap of the roll of tape with the release coating of the underlying lap leading to a partial poisoning of the pressure-sensitive adhesive surface.

It was surprisingly found by the present inventors that the rolls of pressure-sensitive adhesive tape according to the present invention do exhibit a favourable aging behaviour and, in particular, advantageous rolling ball tack values after aging. Rolls of the pressure-sensitive adhesive tape of the present invention having upon aging under aging conditions specified in Example 1 below, a rolling ball tack of 40 mm or less and more preferably of 35 mm or less are preferred.

The use of rolls of pressure-sensitive adhesive tape according to the present invention having upon aging a rolling ball tack of 40 mm or less and more preferably of 35 mm or less for packaging and box-sealing applications is preferred because high tack values result in reliable sealing of boxes, for example.

It was furthermore surprisingly found by the present inventors that the radiation-curable precursor of the release coating preferably comprises less than 5 wt. % and more preferably less than 2 wt. % with respect to the sum of the masses of components (i) and (ii) of one or more MQ resins. The radiation curable precursor of the release coating is especially preferably free of silicone MQ resin. MQ resins are three-dimensional silicone resins that include quadrofunctional silicate groups Q and monofunctional end-capping groups M

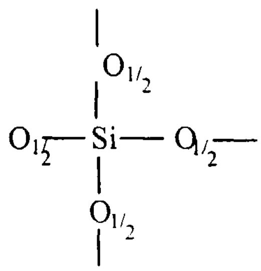

**Q** ,

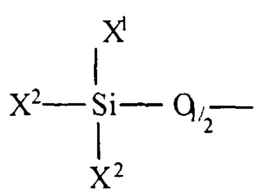

**M**

and, optionally, trifunctional groups T and/or difunctional groups D

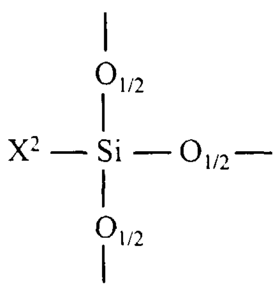

**T**

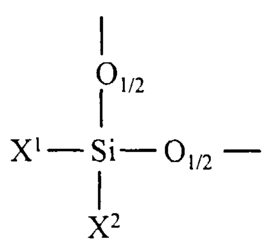

**D.**

wherein $X^1$ and $X^2$ are end groups.

MQ resins are described, for example, in US 5,494,979, EP 0,464,706 and in the co-pending patent application PCT/US98/15,233 filed by the present applicant on July 21, 1998.

A mixture of the low polarity polydialkylsiloxane compound RC 726 and an acrylate-modified MQ resin in a ratio of approximately 70 : 30 wt. % is commercially available as TEGO RC 708 from Th. Goldschmidt AG. The MQ resin component of RC 708 was analyzed by the present inventors, using NMR and GPC analysis, and is believed to have approximately the following properties: a polystyrene equivalent number-average molecular weight of about 3,000 with a heterodispersity index of about 2.0, indicating a very broad molecular weight distribution; and a ratio of M units

over Q units of about 48 - 56 % : 44 - 52 % where the M units:

$$(CH_3)_3SiO—$$

and

$$(CH_3)_2[CH_2—CHCO_2(CH_2)_{6\text{-}8}]SiO—$$

are present in a ratio of about 10 : 1.

It was found by the present inventors that even the inclusion of small amounts of one or more silicone MQ resins into the radiation-curable precursor of the release coating tends to increase the noise level of the resulting pressure-sensitive adhesive coiled into the form of a roll, during unwinding.

The inclusion of one or more silicone MQ resins into polydialkylsiloxane containing release coatings has been disclosed in prior art. In US 5,494,979 it is described that the transfer of the release coating to the adhesive layer can be reduced or avoided when using a release coating that includes the reaction product of a silicone MQ resin and a (meth)acrylated polydialkalsiloxane. Co-pending US patent application PCT/US98/15,233 filed by the present applicant on July 21, 1998, discloses a pressure-sensitive adhesive tape comprising a backing bearing on its opposite surfaces a pressure-sensitive adhesive layer and a release coating, said release coating comprising the reaction product of one or more silicone MQ resins and one or more long-chain and one or more short-chain polydialkylsiloxanes. The pressure-sensitive adhesive tape of PCT/US98/15,233 when coiled into the form of a roll, is characterized by a preferred combination of a low level of noise during unwinding and advantageous values of the unwind force.

Contrary to this it was found by the present inventors that the pressure-sensitive adhesive tapes of the present invention when coiled into the form of a roll, exhibit during unwinding a particularly low noise level, a very low transfer of the release coating to the pressure-sensitive adhesive layer and a sufficient unwind force without requiring the inclusion of a silicone MQ resin into the precursor of the release coating. It was further found by the present inventors that the advantageous combination of

- a very low noise level
- a distinctly reduced transfer of the release coating to the pressure-sensitive adhesive layer
- a high mechanical stability, for example, versus abrasion, and
- a sufficient unwind force and roll stability

of a roll of the pressure-sensitive adhesive tape of the invention upon unwinding typically is rather deteriorated when including one or more silicone MQ resins into the radiation-curable precursor of the release coating so that silicone MQ resins should be included into the radiation-curable precursor of the release coating, if at all, only in small amounts. Pressure-sensitive adhesive tapes of the present invention comprising only a small amount of one or more silicone MQ resins of less than 5 wt. %, more preferably of less than 2 wt. % or being essentially free of silicone MQ resins, preferably exhibit when coiled into the form of a roll, an unwind force of at least about 0.15N/cm, more preferably of at least about 0.20 N/cm and especially preferably of at least about 0.25 N/cm in each case at an unwind speed of about 0.3 m/min.

The pressure-sensitive adhesive tape of the present invention can be made by coating the precursor of the release coating onto a major surface of the backing and subsequently radiation-curing the release coating. The adhesive can then be applied to the other major surface of the backing. The processes may be carried out separately, in-line sequentially, and simultaneously. Both the precursor of the release coating and the adhesive coating are preferably selected to allow for solvent-less coating.

Prior to either or both coating steps, the backing may be treated to enhance adhesion of the composition to the backing. Such treatments include chemical priming, flame treatment, corona treatment, and combinations thereof.

Rolls of the pressure-sensitive adhesive tapes of the present invention are preferably used in applications where a low noise level during unwinding is required.

Pressure-sensitive adhesive tapes of the present invention wherein the radiation-curable precursor of the release coating comprises the reaction product of 10 - 30 wt. % of one or more low-polarity polydialkylsiloxanes of component (i) and 70 - 90 wt. % of one or more high-polarity polydialkylsiloxanes of component (ii), said precursor having a low amount or more preferably being essentially free of silicone MQ resins, are especially preferred for use as packaging and box-sealing tapes because they exhibit a particularly low noise level during unwinding of the roll of tape.

The objectives and advantages of this invention are further illustrated by the following examples but the particular materials and the amounts thereof recited in these examples should not be construed to unduly limit the invention. Several test methods which are utilized in the examples, are also described. Parts given herein are parts by weight.

## Test methods

### *Noise level on unwind (before and after aging)*

A 50 mm wide roll of the pressure-sensitive adhesive tape was unwound in tangential direction at 25 m/min and 60 m/min, respectively. Equipment employed to conduct the unwinding was a High Speed Unwind Machine HSU-100 from Chemsultants International Network, Cincinnati, Ohio, USA.

A Test 815 sound probe (Testo, Lenkirch, Germany) was placed at a distance of 1 meter from the unwinding tape in the direction of the rotation axis around which the tape roll was unwound. The sound level in dB(A) [decibels (absolute)] was read from the meter and recorded.

### *Rolling ball tack*

Rolling ball tack of the pressure-sensitive adhesive surface used in the pressure-sensitive adhesive tapes, was measured according to Tape Test Method PSTC - 6 (Pressure-sensitive Tape Council, Chicago, Illinois, USA). The rolling ball tack test is a measure of the performance of the pressure-sensitive adhesive after the pressure-sensitive adhesive layer of a lap of the roll of tape has been in contact with the release coating of the underlying lap in the tape roll.

The results were recorded in mm. Each pressure-sensitive adhesive tape was evaluated three times using a freshly unrolled adhesive tape section and the results were then averaged.

### *Readhesion test*

The readhesion test is designed to determine whether the curable precursor of the release coating has been cured completely. The 180° peel adhesion value of a standard pressure-sensitive adhesive tape bearing a rubber-resin adhesive is measured from the surface of a standard release coating which is known to be fully cured and/or not capable of being transferred to the adhesive surface. The 180° peel adhesion of the same standard adhesive tape is then measured from the release coatings according to examples of the present invention or comparative examples, respectively. If the release coating is partially or fully transferred and the adhesive surface is contaminated, then the second 180° peel adhesion value will be lower than the first 180° peed adhesion value measured from the standard release coating. The ratio of the 180° peel adhesion values thus obtained is also termed as "re-adhesion" value. A comparison of the two measurements can be made by dividing the second, often lower, value by the first value and expressing the number in per cent.

The standard silicone release surface used was prepared by coating a biaxially-oriented polypropylene (BOPP) film with a 0.6 g/$m^2$ coating of a mixture TEGO® RC 706 (20 parts) and TEGO® RC711 (80 parts) (available from Th. Goldschmidt AG , Essen, Germany), and 2 parts Darocur® 1173 photoinitiator and curing it with UV radiation as recommended by the manufacturer.

The standard adhesive tape used to evaluate relative curing of different silicone release compositions was a film fastening tape having an exposed rubber resin pressure-sensitive adhesive, said tape being employed as part of a closure system for disposable diapers and available from 3M Company as EFT 1069.

The 180° peel adhesion test was performed according to AFERA 4001 (Association des Fabricants Europeens de Rubans Autoadhesifs). Adhesive tapes lengths were rolled over 6 times with a 2 kg rubber-coated roller. Essentially no dwell time of the adhesive on the test substrate was allowed before the peel test was conducted at a speed of 300 meters / min.

Results were recorded in N/cm. The test was repeated three times and the results averaged. The peel value from the test surface was then divided by the peel value from the standard surface and the number expressed in per cent.

### *Abrasion test*

#### *(a) Method of measurement and evaluation of values measured*

The abrasion resistance of the cured release coating of the pressure-sensitive adhesive tapes was tested using a modified version of AATCC (American Association of Textile Chemists and Colorists, Research Triangle Park, N. C.) test method 8-1972. This test method, originally devised to measure color transfer from fabrics upon rubbing, was adapted to measure the amount of cured release coating lost from a polymeric film surface upon rubbing. The

wiping cloth on the arm of the abrasion testing device which is used in AATCC 8-1972, was replaced by a dry paper tissue as described below.

First, the amount of cured release coating on the surface of a BOPP backing of the pressure-sensitive adhesive tapes was measured quantitatively using X-ray fluorescence as described in section (b) "Measurement of amount of release coating on the surface of the backing of the pressure-sensitive adhesive tape" below.

The abrasion test was then performed employing a Crockmeter Model CM5 (from Atlas Electric Devices Co., Chicago, Ill., USA) as abrasion testing device as is described in AATCC test method 8-1972. The moveable arm used to abrade the suface of the test specimen was fitted with a dry paper tissue (Kimwipes Lite 200 from Kimberly Clark) and then ten rubbing cycles were performed using the BOPP Crockmeter device.

After the test, the amount of release coating on the surface of the backing of the pressure-sensitive adhesive tape was then measured using the x-ray fluorescence technique described below. The two values for the amount of the release coating obtained prior to and after abrasion, respectively, were compared and the percentage of silicone lost during the abrasion test was recorded.

*(b) Measurement of amount of release coating on the surface of the backing of the pressure-sensitive adhesive tape*

The amount of release coating present on the surface of a BOPP backing was measured using an X-ray fluorescence analyser Model 200TL available from ASOMA Instruments, Austin, Texas. The test method is available from Th. Goldschmidt AG, Essen, Germany, in two parts:

1) a calibration technique available as KM RC 005 A and
2) a measurement technique available as SM 316 A.

The calibration technique involves first coating and curing known quantities of the UV curable polydimethysiloxane TEGO-RC 726 (commercially from Th. Goldschmidt) on a polyester film. At least five differing coating weights were coated, UV-cured and measured for their x-ray fluorescence. A calibration curve relating x-ray fluorescence to amount of polydimethylsiloxane present was then prepared.

The measurement technique employs x-ray fluorescence of silicon atoms. A pressure-sensitive adhesive tape having an unknown amount of silicone-based release coating on the surface of its backing is subjected to x-ray fluorescence. The absolute value of the fluorescence is measured for such tape and the measured amount of polydimethylsiloxane is read from the calibration curve.

The actual amount of the release coating on the surface of the backing is then calculated from the measured amount of polydimethylsiloxane using the following formula:

Release coating on backing of pressure-sensitive adhesive tape in g/$m^2$ =

(measured amount of polydimethylsiloxane on coated backing in g/$m^2$ -

measured amount of polydimethylsiloxane on uncoated backing in g/$m^2$) / factor for the release coating

The elements to be employed in the formula are determined by the following:

1. measured amount of polydimethylsiloxane on coated backing is read from the calibration curve relating amount of fluorescence to amount of polydimethylsiloxane present for the coated backing
2. measured mount of polydimethylsiloxane on uncoated backing is the value measured for the backing with no release coating (corresponding to a "blank" measurement)
3. the factor for the release coating is provided by Th. Goldschmidt in the test method (an "RC number") for each of the UV-curable polydialkylsiloxane of the TEGO RC series. This is essentially the fraction of the TEGO RC type compounds which is polydimethylsiloxane. The factor is always less than 1.0 and is lower for UV-curable polydialkylsiloxanes which have less silicone content (more acrylate groups). The factor for the total release coating is calculated in a weighted average fashion using the amount and factor for each of the components employed therein. Additives which have no polydimethylsiloxane units are given a factor of zero.

Further details on the method of measurement of the amount of release coating on the backing of a pressure-sensitive adhesive tape can be taken from the Goldschmidt specifications given above.

Examples

*Example 1*

A 28 micron thick BOPP film (biaxially-oriented polypropylene) was corona-treated on one side and then coated with a UV-curable precursor of a release coating composition that included a mixture of 80 parts by weight Tego® RC 711 (Th. Goldschmidt AG), 20 parts by weight Tego® RC 902 (Th. Goldschmidt AG) and 2 parts Darocur 1173 UV-photoinitiator (2-Hydroxy-2-methyl-1-phenyl-propan-1-one commercially available from Ciba-Geigy, Basel, Switzerland)based on 100 parts of the combined amounts of Tego® RC 711 and Tego® RC 902. The composition of the precursor of the release coating is summarized in Table 1.

The release coating was prepared using a five-roll coater and then cured by UV radiation (120W/cm) using lamps Model F-450 (Fusion UV Systems, Inc., Gaithersberg, Maryland) in a nitrogen atmosphere. The amount of release coating on the film surface was measured quantitatively after curing using the x-ray fluorescence technique described above.

The opposite side of the film was then flame treated and coated with a synthetic rubber resin-based pressure-sensitive adhesive that included Vector 4511 pure triblock styrene-isoprene-styrene synthetic block copolymer (Dexco Polymers), Escorez 2203 LC hydrocarbon tackifier resin (Exxon Chemicals), and Milsol 100 naphthenic oil (Oleotecnica S.p.A., Milan, Italy) in a ratio of 100:100:10 parts by weight. The adhesive composition also included 1.5 parts Irganox 1076 antioxidant and 1.5 parts PS 800 antioxidant (Ciba Geigy, Basel, Switzerland).The adhesive was applied using a standard hot-melt extrusion techniques at a coating weight of 18.5 g/$m^2$ or about 20 microns in thickness. The pressure-sensitive adhesive tape thus prepared was rolled up onto itself and then slit into 50 mm wide rolls.

The rolls of tape were conditioned at 23°C and 50% relative humidity for at least 24 hrs before initial testing. Such rolls of tape and tapes, respectively, are referred to above and below as "freshly prepared" pressure-sensitive adhesive tapes. Aged rolls of tape were prepared by placing them in a 50°C (120 °F) forced air oven for 11 days. Aged rolls were reconditioned at 23°C and 50% relative humidity for at least 24 hrs before testing. Such rolls of tape and tapes, respectively, are referred to above and below as "aged" pressure-sensitive adhesive tapes and rolls of tape, respectively.

The readhesion test showed that the release coating composition was essentially fully cured in that the 180° peel adhesion of a standard tape from the tape of Example 1 and the standard release coating surface described in the test section above were nearly identical. The noise measurements made at a roll unwind speed of 60 m/ min on a freshly prepared and an aged roll of tape, respectively, were 66 dB and 67 dB. Properties of the adhesive tape of Example 1 are summarized in Table 2.

*Comparative Example 1*

Example 1 was repeated with the exception that the two polydialkylsiloxanes employed in the curable precursor of the release coating were Tego® RC 708 (80 parts by weight) and Tego® RC 711 (20 parts by weight). Three parts photoinitiator was employed rather than the two parts of Example 1.

*Comparative Example 2*

Comparative Example 1 was repeated with the exception that the relative amounts of the two polydialkylsiloxane compounds was altered to: Tego® RC 708 (90 parts by weight) and Tego® RC 711 (10 parts by weight).

*Comparative Example 3*

An adhesive tape was prepared as in Example 1 with the exception that the curable precursor of the release coating comprised 100 parts of Tego® RC 708 and no second polydialkylsiloxane compound. The composition was cured with 3 parts photoinitiator as in Comparative Examples 1 and 2.

*Comparative Examples 4 - 5*

Adhesive tapes were prepared by the method of Example 1 using two polydialkylsiloxane compoundss in the release composition: RC 726 and RC 715, respectively. In Comparative Example 4, the respective amounts of RC 726 and RC 715 were 20 parts and 80 parts. In Comparative Example 5, the respective amounts of RC 726 and RC 715 were 80 parts and 20 parts. Two parts of photoinitiator was employed in each composition based on a combined 100 parts by weight of the two polydialkylsiloxane compounds.

*Comparative Examples 6 - 7*

Adhesive tapes were prepared by the method of Example 1 using two polydialkylsiloxane compounds in the release composition: RC 726 and RC 711, respectively. In Comparative Example 6, the respective amounts of RC 726 and RC 711 were 20 parts and 80 parts. In Comparative Example 7, the respective amounts of RC 726 and RC 711 were 80 parts and 20 parts. Two parts of photoinitiator was employed in each composition based on a combined 100 parts by weight of the two polydialkylsiloxane compounds.

*Comparative Examples 8 - 9*

Adhesive tapes were prepared by the method of Example 1 using two polydialkylsiloxane compounds in the release composition: RC 726 and RC 706, respectively. In Comparative Example 8, the respective amounts of RC 726 and RC 706 were 20 parts and 80 parts. In Comparative Example 9, the respective amounts of RC 726 and RC 706 were 80 parts and 20 parts. Two parts of photoinitiator was employed in each composition based on a combined 100 parts by weight of the two polydialkylsiloxane compounds.

*Comparative Examples 10 - 11*

Adhesive tapes were prepared by the method of Example 1 using two polydialkylsiloxane compounds in the release composition: RC 902 and RC 715, respectively. In Comparative Example 10, the respective amounts of RC 902 and RC 715 were 20 parts and 80 parts. In Comparative Example 1, the respective amounts of RC 902 and RC 715 were 80 parts and 20 parts. Two parts of photoinitiator was employed in each composition based on a combined 100 parts by weight of the two polydialkylsiloxane compounds.

*Comparative Example 12*

Adhesive tapes were prepared by the method of Example 1 using two polydialkylsiloxane compounds in the release composition: RC 902 and RC 711, respectively. In Comparative Example 12, the respective amounts of RC 902 and RC 711 were 80 parts and 20 parts. Two parts of photoinitiator was employed based on a combined 100 parts by weight of the two polydialkylsiloxane compounds.

*Comparative Examples 13 - 14*

Adhesive tapes were prepared by the method of Example 1 using two polydialkylsiloxane compounds in the release composition: RC 902 and RC 706, respectively. In Comparative Example 13, the respective amounts of RC 902 and RC 706 were 20 parts and 80 parts. In Comparative Example 14, the respective amounts of RC 902 and RC 706 were 80 parts and 20 parts. Two parts of photoinitiator was employed in each composition based on a combined 100 parts by weight of the two polydialkylsiloxane compounds.

*Comparative Example 15*

Test measurements were made on a roll of 3M Packaging Tape # 371 employing a conventional polyurethane-based low adhesion backsize coated from solvent.

Table 1

| Example | Polydialkylsiloxanes | | | | Darocur 1173 | Coating weight of release coating |
|---|---|---|---|---|---|---|
| | Type | Amount, parts | Type | Amount, parts | Amount, parts | $g/m^2$* |
| Ex. 1 | RC 711 | 80 | RC 902 | 20 | 2 | 0.51 |
| Comp. Ex 1 | RC 708 | 80 | RC 711 | 20 | 3 | 0.65 |
| Comp. Ex 2 | RC 708 | 90 | RC 711 | 10 | 3 | 0.69 |
| Comp. Ex. 3 | RC 708 | 100 | -- | -- | 3 | 0.65 |
| Comp. Ex. 4 | RC 726 | 20 | RC 715 | 80 | 2 | 0.62 |

* measured by the x-ray fluorescence technique described above in section b) of the abrasion test method

Table 1 (continued)

| Example | Polydialkylsiloxanes | | | | Darocur 1173 | Coating weight of release coating |
|---|---|---|---|---|---|---|
| | Type | Amount, parts | Type | Amount, parts | Amount, parts | g/m2* |
| Comp. Ex. 5 | RC 726 | 80 | RC 715 | 20 | 2 | 0.65 |
| Comp. Ex. 6 | RC 726 | 20 | RC 711 | 80 | 2 | 0.62 |
| Comp. Ex. 7 | RC 726 | 80 | RC 711 | 20 | 2 | 0.65 |
| Comp. Ex. 8 | RC 726 | 20 | RC 706 | 80 | 2 | 0.63 |
| Comp. Ex. 9 | RC 726 | 80 | RC 706 | 20 | 2 | 0.63 |
| Comp Ex. 10 | RC 902 | 20 | RC 715 | 80 | 2 | 0.59 |
| Comp. Ex. 11 | RC 902 | 80 | RC 715 | 20 | 2 | 0.60 |
| Comp. Ex. 12 | RC 902 | 80 | RC 711 | 20 | 2 | 0.62 |
| Comp. Ex. 13 | RC 902 | 20 | RC 706 | 80 | 2 | 0.60 |
| Comp. Ex. 14 | RC 902 | 80 | RC 706 | 20 | 2 | 0.58 |

* measured by the x-ray fluorescence technique described above in section b) of the abrasion test method

Table 2

| Example | Re-adhesion | Rolling ball tack, fresh roll of tape | Rolling ball tack, aged roll of tape | Noise at unwind speed of 25 m/min (fresh roll of tape) | Noise at unwind speed of 25 m/ min (aged roll of tape) | Noise at unwind speed of 60 m/min (fresh roll of tape) | Noise at unwind speed of 60 m/ min (aged roll of tape) |
|---|---|---|---|---|---|---|---|
| | % | mm | mm | Decibels [dB(A)] | Decibels [dB(A)] | Decibels [dB(A)] | Decibels [dB(A)] |
| Ex. 1 | 98 | 20 | 25 | 57 | 58 | 66 | 67 |
| Comp. Ex. 1 | 72 | 48 | 62 | 58 | 57 | 79 | 81 |
| Comp. Ex. 2 | 69 | 47 | 84 | 58 | 59 | 79 | 82 |
| Comp. Ex. 3 | 52 | 63 | 79 | 58 | 57 | 77 | 80 |
| Comp. Ex. 15 | 98 | 33 | 38 | 85 | 87 | 95 | 97 |

Table 3

| Example | Abrasion test | Readhesion |
|---|---|---|
| | % silicone lost | % |
| Ex. 1 | 18 | 100 |
| Comp Ex. 4 | 95 | 56 |
| Comp. Ex. 5 | 99 | 62 |
| Comp. Ex. 6 | 54 | 68 |
| Comp. Ex. 7 | 67 | 58 |

Table 3 (continued)

| Example | Abrasion test | Readhesion |
|---|---|---|
| | % silicone lost | % |
| Comp. Ex. 8 | 95 | 65 |
| Comp. Ex. 9 | 93 | 71 |
| Comp. Ex. 10 | 76 | 91 |
| Comp. Ex. 11 | 83 | 96 |
| Comp. Ex. 12 | 48 | 96 |
| Comp. Ex. 13 | 74 | 98 |
| Comp. Ex. 14 | 75 | 98 |

**Claims**

**1.** A pressure-sensitive adhesive tape comprising a backing having a first major surface and a second major surface, a pressure-sensitive adhesive provided on said first major surface, and a release coating provided on said second major surface, said pressure-sensitive adhesive comprising one or more hot-melt coatable synthetic rubber polymers and said release coating comprising the reaction product of:

(i) 5 - 30 wt. % of one or more polydialkylsiloxanes having (meth)acrylate, vinyl and/or ethenylene groups wherein the ratio of the average number of dialkylsiloxane units to the average number of the sum of (meth) acrylate, vinyl and ethenylene groups is between 10 and 17,

(ii) 70 - 95wt. % of one or more polydialkylsiloxanes having (meth)acrylate, vinyl and/or ethenylene groups wherein the average number of dialkylsiloxane units to the average number of the sum of (meth)acrylate, vinyl and ethenylene groups is not more than 5 and/or one or more organic compounds free of silicone and comprising at least two reactive (meth)acrylate, vinyl and/or ethenylene groups,

(iii) an effective amount of one or more photoinitiators,

wherein the weight percentages given for components (i) and (ii), respectively, refer to the sum of the masses of components (i) and (ii) which add up to 100 wt. %, said pressure-sensitive adhesive tape exhibiting, when in the form of a roll, upon unwind at an unwind speed of 60 m/min or less a noise level of no greater than 75 dB(A).

**2.** The pressure-sensitive adhesive tape of claim 1 wherein the reaction product of (i), (ii) and (iii) is essentially free of silicone MQ resins.

**3.** The pressure-sensitive adhesive tape of any of claims claims 1 or 2 wherein said tape when in the form of a roll, exhibits an unwind force of at least about 0.2 N/cm at an unwind speed of about 0 - 3 m/min.

**4.** The pressure-sensitive adhesive tape of any of claims 1 - 3, wherein the backing comprises an oriented polymeric film selected from the group consisting of polyester, polyolefin, or a combination thereof.

**5.** The pressure-sensitive adhesive tape of any of claims 1 - 4, wherein the backing has a thickness of about 20 - 100 μm.

**6.** The pressure-sensitive adhesive tape of claim 1, wherein the adhesive comprises one or more synthetic rubber block copolymers.

**7.** The pressure-sensitive adhesive tape of claim 6 wherein the adhesive comprises one or more ABA-type or AB-type synthetic resin block copolymers where A is a thermoplastic block and B is a rubber block.

**8.** The pressure-sensitive adhesive tape of claim 7, wherein the pressure-sensitive adhesive comprises a block copolymer selected from the group consisting of styrene-isoprene-styrene, styrene-butadiene-styrene, styrene-ethylene-butylene-styrene, or a combination thereof.

**9.** Use of a roll of pressure-sensitive adhesive tape comprising a backing having a first major surface and a second major surface, a pressure-sensitive adhesive provided on said first major surface, and a release coating provided on said second major surface, said pressure-sensitive adhesive comprising one or more hot-melt coatable synthetic rubbers and said release coating comprising the reaction product of:

(i) one or more polydialkylsiloxanes having (meth)acrylate, vinyl and/or ethenylene groups wherein the ratio of the average number of dialkylsiloxane units to the average number of the sum of (meth)acrylate, vinyl and ethenylene groups is between 10 and 17,

(ii) one or more polydialkylsiloxanes having (meth)acrylate, vinyl and/or ethenylene groups wherein the average number of dialkylsiloxane units to the average number of the sum of (meth)acrylate, vinyl and ethenylene groups is not more than 5 and/or one or more organic compounds free of silicone and comprising at least two reactive (meth)acrylate, vinyl and/or ethenylene groups,

(iii) an effective amount of one or more photoinitiators,

wherein the weight percentages given for components (i) and (ii), respectively, refer to the sum of the masses of components (i) and (ii) which add up to 100 wt. %, for low noise / high unwind speed applications, wherein said roll of pressure-sensitive adhesive tape exhibits upon unwind at an unwind speed of 60 m/min or less a noise level of no greater than 75 dB(A).

**10.** Use of a roll of pressure-sensitive adhesive tape of claim 9 or a roll of pressure-sensitive adhesive tape of claims 1 - 8 for said roll having upon aging a rolling ball tack of less than 40 mm, for packaging and box-sealing applications.

**11.** Method of preparing the pressure-sensitive adhesive tape of any of claims 1 - 8 and of the pressure-sensitive adhesive tape used in claims 9 - 10 comprising the steps of

- providing a backing optionally pre-treated with chemical primers or plasma discharge treating methods on one or both major surfaces,
- hot-melt extruding the pressure-sensitive adhesive layer onto the first major surface of the backing,
- coating the curable precursor of the release coating comprising said components (i) - (iii) onto the second major surface, and
- curing the applied release coating by exposing it to actinic radiation or thermal energy.

European Patent Office

# EUROPEAN SEARCH REPORT

Application Number
EP 99 11 5882

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | "NEUE TEGO® RC PRODUKTE FÜR DIE HERSTELLUNG STRAHLENHÄRTENDER TRENNBESCHICHTUNGEN"<br>Product brochure, August 1998<br>Th. Goldschmidt AG, Essen (D)<br>XP002127009<br>* table 1 *<br>* page 2, left-hand column, paragraph 7 *<br>* page 4, left-hand column, paragraphs 2,3 *<br>* page 4, left-hand column *<br>* page 5, right-hand column, paragraph 4 *<br>* page 6, right-hand column, paragraph 1 *<br>--- | 1-11 | C09J7/02<br>C09D183/04<br>C09D183/06<br>C08F290/14 |
| A | WO 95 23694 A (AVERY DENNISON CORP)<br>8 September 1995 (1995-09-08)<br>* claims 1,10 *<br>* table 2 *<br>* page 12, line 3 - line 6 *<br>* page 13, line 5,6 *<br>--- | 1-11 | |
| A | EP 0 624 627 A (SHINETSU CHEMICAL CO)<br>17 November 1994 (1994-11-17)<br>* claim 1 *<br>* page 4, line 56,57 *<br>* page 5, line 6 - line 12 *<br>* page 5, line 48 - line 55 *<br>--- | 1-11 | **TECHNICAL FIELDS SEARCHED (Int.Cl.7)**<br>C09J<br>C09D<br>C08F |
| A | US 4 201 808 A (BABIAN GUNTHER W ET AL)<br>6 May 1980 (1980-05-06)<br>* claim 1 *<br>----- | 1 | |

The present search report has been drawn up for all claims

| Place of search | Date of completion of the search | Examiner |
|---|---|---|
| THE HAGUE | 12 January 2000 | Schlicke, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 11 5882

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2000

| Patent document cited in search report | Publication date | Patent family member(s) | Publication date |
|---|---|---|---|
| WO 9523694 A | 08-09-1995 | AU 1933095 A | 18-09-1995 |
| | | BR 9507124 A | 30-09-1997 |
| | | CN 1143346 A | 19-02-1997 |
| | | DE 19581563 T | 27-02-1997 |
| | | GB 2301369 A,B | 04-12-1996 |
| | | US 5494945 A | 27-02-1996 |
| | | US 5654093 A | 05-08-1997 |
| EP 0624627 A | 17-11-1994 | DE 69406583 D | 11-12-1997 |
| | | DE 69406583 T | 19-03-1998 |
| | | FI 942249 A | 15-11-1994 |
| | | JP 7026146 A | 27-01-1995 |
| | | US 5436281 A | 25-07-1995 |
| US 4201808 A | 06-05-1980 | CA 1121542 A | 06-04-1982 |
| | | EP 0006705 A | 09-01-1980 |
| | | JP 1160396 C | 25-07-1983 |
| | | JP 54162787 A | 24-12-1979 |
| | | JP 57057096 B | 02-12-1982 |

EPO FORM P0459

For more details about this annex : see Official Journal of the European Patent Office, No. 12/82